(19) Europäisches Patentamt

European Patent Office

Office européen des brevets

(11) **EP 0 990 907 A1**

(12) **EUROPÄISCHE PATENTANMELDUNG**

(43) Veröffentlichungstag:
   **05.04.2000  Patentblatt 2000/14**

(51) Int. Cl.[7]: **G01N 35/10**

(21) Anmeldenummer: **98810984.9**

(22) Anmeldetag: **30.09.1998**

(84) Benannte Vertragsstaaten:
   **AT BE CH CY DE DK ES FI FR GB GR IE IT LI LU MC NL PT SE**
   Benannte Erstreckungsstaaten:
   **AL LT LV MK RO SI**

(71) Anmelder:
   **F. HOFFMANN-LA ROCHE AG
   4070 Basel (CH)**

(72) Erfinder:
   • **Schmidiger, Willi
     6125 Menzberg (CH)**
   • **Sidler, Thomas
     6343 Rotkreuz (CH)**
   • **Zweifel, Heinrich
     9620 Lichtensteig (CH)**

(74) Vertreter:
   **AMMANN PATENTANWAELTE AG BERN
   Schwarztorstrasse 31
   3001 Bern (CH)**

(54)   **Vorrichtung zur Positionierung einer Pipettiernadel**

(57)   Vorrichtung zur Positionierung der Spitze (12) einer Pipettiernadel (11) bezüglich der Oberfläche (13) einer in einem Behälter (14) enthaltenen Flüssigkeit (15), wobei in der Flüssigkeit eventuell Blasen enthalten und/oder auf der Flüssigkeit Schaum (16) angeordnet sein können, umfassend

- einen Stelltrieb (19) für die Nadel (11) einschliesslich Motor (20) und zugeordneter Steuerung (21),
- einen HF-Generator zum Anlegen eines Hochfrequenzfeldes zwischen der Nadel (11) und der Bodenplatte (24) unterhalb des Behälters (14),
- einen Sensor (25) zum Abgeben von primären Messwerten, die aus dem Hochfrequenzfeld abgeleitet werden, und
- einen Signalgeber zum Abgeben eines Endesignals, sobald die gewünschte Position der Nadel (11) erreicht ist, dadurch gekennzeichnet,
- dass der Sensor (25) zum Bereitstellen von Messwerten ausgebildet ist, die wenigstens zwei unterschiedlichen physikalischen Grössen entsprechen,
- dass ein erster Speicher (26.1) für vorermittelte Schwellwerte (S) vorgesehen ist,
- dass ein zweiter Speicher (26.2) für die Aktuellen, vom Sensor (25) abgegebenen Messwerte und für von diesen abgeleitete Datenwerte $(C_n, G_n, P_n, dC_n, dG_n, dP_n)$ vorgesehen ist, und
- dass eine Logikeinheit (26) zum Vergleichen der Datenwerte $(C_n, G_n, P_n, dC_n, dG_n, dP_n)$ mit den vorermittelten Schwellwerten (S) vorgesehen ist.

**Fig. 1**

**Beschreibung**

Die Erfindung betrifft eine Vorrichtung zur Positionierung einer Pipettiernadel entsprechend dem Oberbegriff von Anspruch 1. Sie betrifft weiter ein Verfahren zum Betreiben der Vorrichtung

Aus der Schrift US-5,493,922 ist ein Automat mit vertikal bewegbarer Pipettiernadel bekannt, bei dem die Position der Nadel gegenüber der Oberfläche einer jeweiligen, in einem Gefäss enthaltenen Flüssigkeit bestimmt wird. Zur Bestimmung der Position dient ein mit der Nadel gekoppelter Oszillatorkreis, der über einen monostabilen Multivibrator den Stellmotor steuert.

Die Schrift EP-0 694 784 A1 beschreibt einen Automat für die Untersuchung flüssiger Proben, bei dem Probengefässe zwischen zwei vertikalen Elektroden angeordnet sind. Zwischen diesen Elektroden und der Pipettiernadel wird die elektrostatische Kapazität gemessen, aus der sich mit Hilfe eines Computers die jeweilige Flüssigkeitsoberfläche und eventuell abnormale Zustände ermitteln lassen.

Aus der Schrift US-5,012,683 ist eine Einrichtung zum Bestimmen der Füllhöhe von Küvetten in einem Proben-Entnahme-Automat bekannt. Diese Einrichtung umfasst eine vertikal und ausserhalb des Probengefässes bewegbare Sensor-Elektrode, die an einem Oszillator angeschlossen ist. Gemessen wird die Amplitude oder die Phase der elektrischen Schwingung, woraus mit Hilfe einer zentralen Logik die Position der Flüssigkeitsoberfläche ermittelbar ist. Entsprechend der Schrift US-5,265,482 des gleichen Anmelders lassen sich die ermittelten Werte speichern und zum späteren Suchen ausgewählter Proben wiederverwenden.

In der Schrift US-4,326,851 wird ein Füllhöhen-Sensor beschrieben, der in Pipettier-Automaten integriert ist. Dieser Sensor verwendet eine Wechselspannung, die zwischen der Pipettiernadel und einer Bodenplatte unter der Flüssigkeit angelegt wird. Hierbei dient der Spannungswechsel beim Berühren von Flüssigkeit und Nadel als Signal für das Erreichen der richtigen Nadelposition.

Den Füllhöhen-Sensoren der genannten Schriften ist es im wesentlichen gemeinsam, hochfrequente Felder zu verwenden, deren Parameter vom Abstand der Pipettiernadel von der Flüssigkeitsoberfläche abhängen. Aus der Praxis ist es jedoch bekannt, dass diese Abhängigkeit nicht genügend eindeutig ist, so dass in einer erheblichen Zahl von Situationen Fehlmessungen und hierdurch Fehler beim Pipettieren entstehen, was sehr störend ist.

Der Erfindung liegt daher die Aufgabe zugrunde, eine Vorrichtung zum genauen Positionieren der Spitze einer Pipettiernadel bezüglich der Oberfläche einer in einem Behälter enthaltenen Flüssigkeit bereit zu stellen. Diese Vorrichtung soll ermöglichen, Fehlmessungen bzw. Fehlanalysen zu vermeiden. Insbesondere soll die erfindungsgemässe Vorrichtung, die genaue Positionierung der Spitze einer Pipettiernadel auch dann ermöglichen, wenn die Flüssigkeitsoberfläche durch Schaum bedeckt ist und/oder wenn Blasen in der Flüssigkeit enthalten sind, die zum Beispiel durch Schütteln der Flüssigkeit entstehen können.

Diese Aufgabe wird erfindungsgemäss mit einer Vorrichtung gelöst, deren wesentlichen Merkmale im kennzeichnenden Teil des Anspruchs 1 definiert sind. Ausgestaltungen der erfindungsgemässen Vorrichtung sind durch die abhängigen Ansprüche definiert.

Die Vorteile, die mit der erfindungsgemässen Vorrichtung erzielt werden, liegen insbesondere darin, dass die jeweils gewünschte Positionierung der Spitze der Pipettiernadel unmittelbar unter die Oberfläche diverser, unterschiedlicher Flüssigkeiten schnell und vor allem mit hoher Zuverlässigkeit und Sicherheit erzielt wird. Hierdurch vermindern sich die eingangs genannten Fehlanalysen wesentlich. Die erfindungsgemässe Vorrichtung ist insbesondere sowohl für die Pipettierung von biologischen flüssigen Proben, als auch für die Pipettierung von flüssigen Reagenzien geeignet, die in klinisch chemischen Analysensystemen verwendet werden.

Im folgenden werden Ausführungsbeispiele der Erfindung anhand von zwei Figuren näher beschrieben. Es zeigen:

Figur 1    ein Blockschaltbild einer Vorrichtung zur Positionierung einer Pipettiernadel gegenüber einer Probenflüssigkeit,

Figur 2    ein Flussdiagramm.

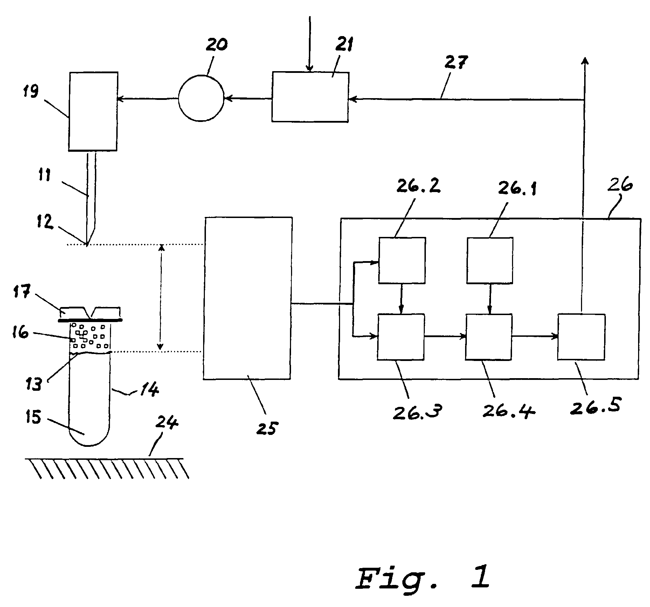

Figur 1 zeigt das Blockschaltbild einer Vorrichtung, die in Art eines Regelkreises aufgebaut ist und dazu dient, eine Pipettiernadel 11 mit ihrer Spitze 12 in eine bestimmte Position bezüglich der Oberfläche 13 einer in einem Behälter bzw. in einem Gefäss 14 enthaltenen Flüssigkeit 15 zu bringen. Dies bedeutet, dass die Spitze 12 der Nadel 11 zum Zwecke der Probenentnahme beispielsweise genau 1 mm unter die Oberfläche 13 abgesenkt werden soll, und zwar auch dann, wenn über der Oberfläche 13 Schaum 16 und/oder ein Deckel 17 zum Verschliessen des Behälters 14 vorhanden sind. Die Pipettiernadel 11 besteht aus einem elektrisch leitenden Material.

Die Vorrichtung gemäss Figur 1 umfasst einen Stelltrieb 19, der von einem Motor 20 mit Motorsteuerung 21, beispielsweise einem Gleichstrommotor mit angekoppelter Taktscheibe, bewegt wird. Zwischen der Pipettiernadel 11 und einer Bodenplatte 24 unterhalb der Küvette 14 ist durch einen nicht gezeigten Generator ein Hochfrequenzfeld angelegt. Die Bodenplatte 24 besteht aus einem elektrisch leitenden Material. Ein Sensor 25 detektiert die Admittanz bzw. die Impedanz dieses Feldes und gibt im Takt der Taktscheibe die der jeweiligen Nadelposition zugeordnete Kapazität $C_n$ und

den jeweiligen zugeordneten Leitwert $G_n$ als Messwerte an eine Logikeinheit 26 ab. Diese Einheit 26 umfasst einen ersten 26.1 und einen zweiten Speicher 26.2, zwei Logikkreise 26.3, 26.4 und einen Bewertungskreis 26.5 und gibt ein Steuersignal über die Verbindung 27 nach aussen und an die Motorsteuerung 21 ab.

Im Speicher 26.1 sind Vergleichswerte gespeichert, die einer typischen Gefäss/Flüssigkeit-Situation entsprechen. Diese Vergleichswerte dienen vorzugsweise als Schwellwerte.

Im Speicher 26.2 werden die während der Bewegung der Nadel 11 ermittelten Messwerte, d. h. insbesondere die jeweilige Kapazitätswerte $C_n$ und die jeweils zugeordneten Leitwerte $G_n$ und Phasenwerte $P_n$, laufend gespeichert, so dass jeweils eine Folge von zeitlich aufeinander folgenden, ersten Datenwerten für die weitere Bearbeitung bereitsteht. Diese ersten Datenwerte können zur Verringerung von statistischen Schwankungen gefiltert sein, beispielsweise durch Mittelwertbildung aus z. B. jeweils fünf benachbarten Einzelwerten.

Der erste Logikkreis 26.3 bildet fortlaufend aus den benachbarten (eventuell gefilterten) ersten Datenwerten $C_n$, $G_n$, $P_n$ Differenzwerte bzw. zweite Datenwerte $dC_n = C_n - C_{n-1}$ und $dG_n = G_n - G_{n-1}$ (n: fortlaufende Numerierung), die im zweiten Logikkreis 26.4 jeweils mit den vom ersten Speicher 26.1 zur Verfügung gestellten Schwellwerten verglichen werden. Sobald die noch zu beschreibenden Kriterien im dritten Logikkreis 26.5 erfüllt sind, gibt dieser über die Verbindung 27 ein Endesignal nach aussen und an die Motorsteuerung 21 ab, wodurch der Motor 20 gestoppt wird. Bei einwandfreiem Arbeiten der Vorrichtung entsprechend Figur 1 befindet sich die Spitze 12 der Pipettiernadel 11 dann unabhängig von der Füllhöhe des Behälters 14 und genau definiert, dicht unter der Oberfläche 13 der Flüssigkeit 15, so dass im weiteren aus dieser Flüssigkeit, eventuell nach weiterem Absenken der Nadel, durch die Nadel 11 Flüssigkeit 15 abgesaugt bzw. in diese Flüssigkeit 15 eine andere Flüssigkeit eingespritzt werden kann.

Die Logikeinheit 26 kann in konventioneller Weise aus Schaltkreisen, z. B. unter Verwendung von Operationsverstärkern aufgebaut sein. In bevorzugter Art handelt es sich jedoch um einen programmgesteuerten Prozessor, bei dem die Logikkreise 26.3, 26.4, 26.5 durch spezielle Programmteile 31, 34, 36, die seriell ablaufen, realisiert sind.

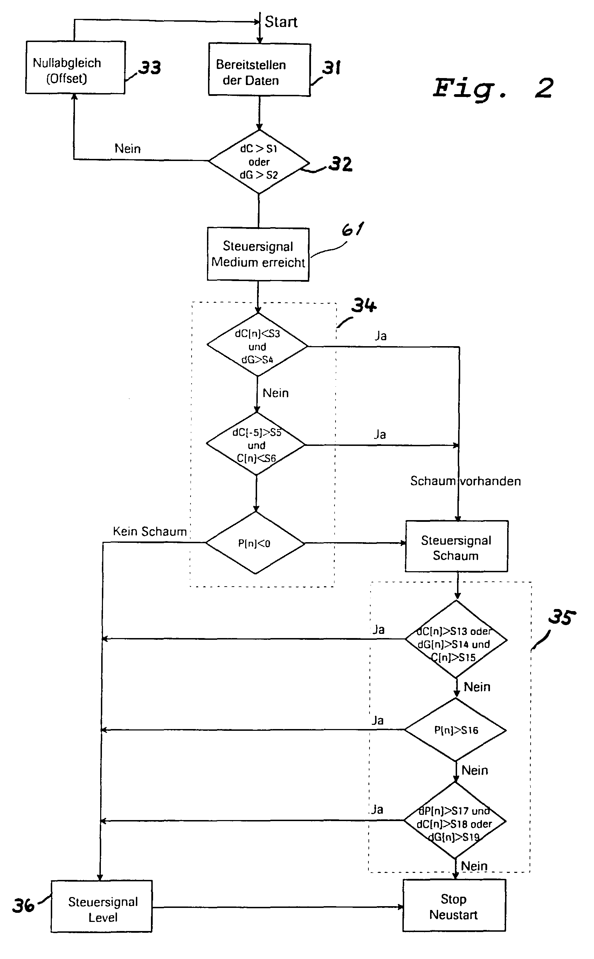

Figur 2 zeigt die Gesamtfunktion der Logikeinheit 26 anhand eines Flussdiagramms. Die vom Sensor 25 ermittelten jeweiligen Werte der Kapazität $C_n$, des Leitwertes $G_n$ und der Phase $P_n$ werden als erste Datenwerte im Speicher 26.2 gespeichert und dienen in einem ersten Verarbeitungsschritt 31 zum Bereitstellen gefilterter und aufbereiteter Daten für die weitere Bearbeitung. Insbesondere erfolgt die Bereitstellung gefilterter Werte $C_n$, $G_n$ und die Ermittlung von Differenzwerten $dC_n$ und $dG_n$ sowie die Berechnung der Phase $P_n$ und

der Phasendifferenz $dP_n$.

Die Differenzwerte $dC_n$ und $dG_n$ werden in einem ersten Entscheidungsschritt 32 mit ersten Schwellwerten S1, S2 aus dem Speicher 26.1 verglichen. Dieser Vergleich dient vor allem dem Nullabgleich 33 des Messsystems aus Pipettiernadel 11, Behälter 14, Flüssigkeit 15, Bodenplatte 24 und eines alternativ vorhandenen Behälterdeckels 17.

Ist der Nullabgleich erfolgt, tritt im weiteren das Ereignis 61 "Medium erreicht" ein, sobald die Spitze 12 der Nadel 11 entweder auf Flüssigkeit 15 oder auf Schaum 16 getroffen ist. Dies wird an die Motorsteuerung 21 gemeldet.

In einem zweiten, dreistufigen, vom Ereignis 61 ausgelösten Entscheidungsschritt 34 wird anschliessend aus den Daten, insbesondere den Differenzwerten $dC_n$, $dC_{n-5}$, $dG_n$, $C_n$, und $P_n$ im Vergleich mit zweiten, im Speicher 26.1 gespeicherten Schwellwerten S3 - S6 und Null (0) und teilweise in logischer UND-Kombination der Daten ermittelt, ob das erreichte Medium Schaum 16 oder Flüssigkeit 15 ist. Ist das Medium kein Schaum 16, wird das Signal 36 "Flüssigkeitsoberfläche erreicht" (Level) abgegeben.

Ist das Medium dagegen Schaum 16, dann beginnt ein dritter Entscheidungsschritt 35, mit dem die Flüssigkeitsoberfläche unter dem Schaum 16 detektiert wird. Dieser Entscheidungsschritt umfasst wiederum drei Entscheidungsstufen, in welchen die Daten dCn, dGn, Cn, Pn, dPn, teilweise in logischer Kombination, mit Schwellwerten S13 bis S19 verglichen werden. Wird die Flüssigkeitsoberfläche detektiert, wird ebenfalls das genannte Signal 36 abgegeben. Sind dagegen alle Vergleiche negativ, dann erfolgt das Signal "Ende", durch welches entweder ein Stopp oder ein Neustart ausgelöst wird.

Wichtig bei den Entscheidungsschritten 32,34,35 ist, dass grundsätzlich bzw. zumindest stark überwiegend jeweils wenigstens zwei unterschiedliche physikalische Grössen in Kombination für die Entscheidungsfindungen verwendet werden. Diese Kombination in Form von logischen UND oder ODER-Verknüpfungen vermindert Fehlentscheidungen drastisch, da der dynamische Verlauf der unterschiedlichen Grössen während der Bewegung der Nadel 11 massiv voneinander abweichend ist.

Wichtig ist weiter, dass die Verarbeitungs- und Entscheidungsschritte 31, 32, 34, 35 seriell erfolgen. Hierdurch wird sichergestellt, dass sich die unterschiedlichen Entscheidungskriterien nicht überlappen und gegenseitig beeinflussen.

Wichtig ist weiter, dass die diversen Schwellwerte S des Speichers 26.1 durch Vorermittlungen bezüglich der im konkreten Fall verwendeten Elemente Pipettiernadel 11, Gefäss 14, Flüssigkeit 15, Bodenplatte 24 und eventuell weiterer Elemente sauber ermittelt sind.

Als Daten können weitere und/oder andere Grössen verwendet werden, z. B. zeitabhängige Grös-

sen $dC_n/dt$, $dG_n/dt$ usw.

Das anhand der Figur 2 beschriebene Flussdiagramm und der zugeordnete Algorithmus können im einzelnen diversen Varianten unterliegen, ohne dass der wesentliche technische Gehalt hierdurch betroffen wird.

Zusammenfassend wurde oben eine Vorrichtung beschrieben zur Positionierung der Spitze 12 einer Pipettiernadel 11 bezüglich der Oberfläche 13 einer in einem Behälter 14 enthaltenen Flüssigkeit 15, wobei in der Flüssigkeit eventuell Blasen enthalten und/oder auf der Flüssigkeit Schaum 16 angeordnet sein können. Diese Vorrichtung umfasst einen Stelltrieb 19 für die Nadel 11 einschliesslich Motor 20 und zugeordneter Steuerung 21, einen HF-Generator zum Anlegen eines Hochfrequenzfeldes zwischen der Nadel 11 und einer Bodenplatte 24 unterhalb des Behälters 14, einen Sensor 25 zum Abgeben von primären Messwerten, die aus dem Hochfrequenzfeld abgeleitet werden, und einen Signalgeber zum Abgeben eines Endesignals, sobald die gewünschte Position der Nadel 11 erreicht ist.

Der Sensor 25 ist ausgebildet zum Bereitstellen von Messwerten, die wenigstens zwei unterschiedlichen physikalischen Grössen entsprechen.

Die Vorrichtung umfasst ferner einen ersten Speicher 26.1 für vorermittelte Schwellwerte S, einen zweiten Speicher 26.2 für die aktuellen, vom Sensor 25 abgegebenen Messwerte und für von diesen abgeleitete Datenwerte $C_n$, $G_n$, $P_n$, $dC_n$, $dG_n$, $dP_n$, und eine Logikeinheit 26 zum Vergleichen der Datenwerte $C_n$, $G_n$, $P_n$, $dC_n$, $dG_n$, $dP_n$ mit den Schwellwerten S.

Die oben anhand der Figuren 1 und 2 beschriebene Vorrichtung hat sich in Tests und in praktischen Versuchen bestens bewährt.

Der Einsatz der beschriebenen Vorrichtung erfolgt bevorzugt in Analysenautomaten für klinisch chemischen Analysen, wobei sie sowohl auf der Probenseite als auch auf der Reagenzseite erfolgreich einsetzbar ist, was gewährleistet, dass bei den Analysen ein hoher Qualitätstandard routinemässig eingehaltbar ist.

**Patentansprüche**

1. Vorrichtung zur Positionierung der Spitze (12) einer Pipettiernadel (11) bezüglich der Oberfläche (13) einer in einem Behälter(14) enthaltenen Flüssigkeit (15), wobei in der Flüssigkeit Blasen enthalten und/oder auf der Flüssigkeit Schaum (16) angeordnet sein können, umfassend

   - einen Stelltrieb (19) für die Nadel (11) einschliesslich Motor (20) und zugeordneter Steuerung (21),
   - einen HF-Generator zum Anlegen eines Hochfrequenzfeldes zwischen der Nadel (11) und einer Bodenplatte (24) unterhalb des Behälters (14),
   - einen Sensor (25) zum Abgeben von primären Messwerten, die aus dem Hochfrequenzfeld abgeleitet werden, und
   - einen Signalgeber zum Abgeben eines Endesignals, sobald die gewünschte Position der Nadel (11) erreicht ist, dadurch gekennzeichnet,
   - dass der Sensor (25) ausgebildet ist zum Bereitstellen von Messwerten, die wenigstens zwei unterschiedlichen physikalischen Grössen entsprechen,
   - dass ein erster Speicher (26.1) für vorermittelte Schwellwerte (S) vorgesehen ist,
   - dass ein zweiter Speicher (26.2) vorgesehen ist für die aktuellen, vom Sensor (25) abgegebenen Messwerte und für von diesen abgeleitete Datenwerte ($C_n$, $G_n$, $P_n$, $dC_n$, $dG_n$, $dP_n$), und
   - dass eine Logikeinheit (26) vorgesehen ist zum Vergleichen der Datenwerte ($C_n$, $G_n$, $P_n$, $dC_n$, $dG_n$, $dP_n$) mit den vorermittelten Schwellwerten (S).

2. Vorrichtung nach Anspruch 1,
   dadurch gekennzeichnet,

   dass der Sensor (25) ausgebildet ist zur ständig wiederholten Messung der Impedanz oder der Admittanz zwischen der Pipettiernadel (11) und der Bodenplatte (24) und zum fortgesetzten Abgeben von davon abgeleiteten jeweiligen ersten Datenwerten Kapazität ($C_n$), Leitwert ($G_n$) und/oder Phase ($P_n$).

3. Vorrichtung nach Anspruch 1 bis 2,
   dadurch gekennzeichnet,

   dass in der Logikeinheit (26) ein erster Logikkreis (26.3) vorgesehen ist, der aus der zeitlichen Folge der ersten Datenwerte ($C_n$, $G_n$, $P_n$) zweite Datentwerte ($dC_n$, $dG_n$, $dP_n$) ableitet, dass ein zweiter Logikkreis (26.4) vorgesehen ist, der das Eintauchen der Nadelspitze (12) in ein von Luft verschiedenes Medium, und das Medium als Flüssigkeit (15) oder als Schaum (16) erkennt,
   und dass ein dritter Logikkreis 26.5 vorgesehen ist, der beim Vorhandensein von Schaum (16) das Eintauchen der Nadelspitze (12) in die unter dem Schaum (16) liegende Flüssigkeit (15) ermittelt,
   wobei der erste (26.3), der zweite (26.4) und der dritte Logikkreis (26.5) in Serie geschaltet sind, und wobei jeder Entscheidungsschritt (32, 34, 35) unter wenigstens einer logischen UND- oder ODER-Verknüpfung von zwei physikalisch unterschiedlichen Datenwerten ($C_n$, $G_n$, $P_n$, $dC_n$, $dG_n$, $dP_n$) erfolgt.

**4.** Vorrichtung nach Anspruch 1 bis 3,
dadurch gekennzeichnet,

dass der erste Logikkreis (26.3) einen Nullabgleich ausführt, insbesondere zum Eliminieren des Einflusses eines eventuellen Deckels (17) auf dem Behälter (14).

**5.** Vorrichtung nach Anspruch 1 bis 3,
dadurch gekennzeichnet,

dass der erste Logikkreis (26.3) die ersten Datenwerte ($C_n$, $G_n$, $P_n$) durch Mittelung benachbarter Messwerte, und dass der zweite Logikkreis (26.4) die zweiten Datenwerte ($dC_n$, $dG_n$, $dP_n$) durch Differenzbildung aus benachbarten ersten Datenwerten ($C_n$, $G_n$, $P_n$) bildet.

**6.** Vorrichtung nach Anspruch 1 bis 3,
dadurch gekennzeichnet,

dass die Logikeinheit (26) als programmgesteuerter Prozessor ausgebildet ist,
wobei das zugeordnete Programm aus drei Unterprogrammen (31, 34, 36) für das Aufbereiten der Messwerte und das Bereitstellen der Datenwerte ($C_n$, $G_n$, $P_n$, $dC_n$, $dG_n$, $dP_n$) für das Detektieren von Schaum (16) über der Flüssigkeits-Oberfläche (13) und für das Detektieren des Eintauchens der Nadelspitze (12) in die Oberfläche (13) in serieller Weise zusammengesetzt ist.

**7.** Verfahren zum Betreiben der Vorrichtung nach einem der Ansprüche 1 bis 6,
dadurch gekennzeichnet,

-   dass vor dem Beginn der Nadelbewegung die Pipettiernadel (11) in eine fixe Startposition gebracht wird,
-   dass anschliessend an ein Startsignal die Nadel (11) in eine kontinuierliche Bewegung versetzt wird,
-   dass der Sensor (25) in einem verschiebungsabhängigen Takt so lange Messwerte ermittelt und in die Logikeinheit (26) eingibt, bis die hiervon abgeleiteten Datenwerte ($C_n$, $G_n$, $P_n$, $dC_n$, $dG_n$, $dP_n$) schliesslich vorgegebenen Entscheidungskriterien entsprechen, und
    dass die Logikeinheit (26) dem entsprechende Steuersignale abgibt.

**8.** Verfahren nach Anspruch 7,
dadurch gekennzeichnet,

dass vorgängig der jeweils ersten Messwertermittlung ein Nullabgleich für das System aus Pipettiernadel (11), Behälter (14), Behälterdeckel (17) Flüssigkeit (15) und Bodenplatte (24) vorgenommen wird.

Fig. 1

*Fig. 2*

Europäisches
Patentamt

**EUROPÄISCHER RECHERCHENBERICHT**

Nummer der Anmeldung

EP 98 81 0984

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y | EP 0 526 210 A (TOA MEDICAL ELECTRONICS) 3. Februar 1993 <br> * Zusammenfassung; Abbildungen 2-4 * <br> * Spalte 1, Zeile 54 - Spalte 2, Zeile 29 * <br> * Spalte 2, Zeile 50 - Spalte 4, Zeile 48 * | 1,2,7 | G01N35/10 |
| A | | 3-6,8 | |
| | --- | | |
| Y | WO 98 12513 A (PHARMACIA & UPJOHN AB ;KIVINEEME JUHAN (SE); LJUNG ARNE (SE)) 26. März 1998 <br> * Zusammenfassung; Abbildungen 1,2 * <br> * Seite 4, Zeile 16 - Seite 8, Zeile 23 * | 1,2,7 | |
| A | | 3-6,8 | |
| | --- | | |
| A | EP 0 355 791 A (HITACHI LTD) 28. Februar 1990 <br> * Zusammenfassung; Abbildungen 1,3-5,15 * <br> * Spalte 5, Zeile 20 - Spalte 6, Zeile 55 * <br> * Spalte 12, Zeile 52 - Spalte 14, Zeile 24 * | 1-8 | |
| | ------ | | **RECHERCHIERTE SACHGEBIETE (Int.Cl.6)** <br><br> G01N |

Der vorliegende Recherchenbericht wurde für alle Patentansprüche erstellt

| Recherchenort | Abschlußdatum der Recherche | Prüfer |
|---|---|---|
| DEN HAAG | 21. April 1999 | Runser, C |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes
    Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 98 81 0984

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-04-1999

| Im Recherchenbericht angeführtes Patentdokument | Datum der Veröffentlichung | Mitglied(er) der Patentfamilie | Datum der Veröffentlichung |
|---|---|---|---|
| EP 0526210 A | 03-02-1993 | US 5319954 A | 14-06-1994 |
| WO 9812513 A | 26-03-1998 | KEINE | |
| EP 0355791 A | 28-02-1990 | JP 1883078 C | 10-11-1994 |
| | | JP 2059619 A | 28-02-1990 |
| | | JP 6003395 B | 12-01-1994 |
| | | DE 68919167 D | 08-12-1994 |
| | | DE 68919167 T | 24-05-1995 |
| | | US 4970468 A | 13-11-1990 |

EPO FORM P0461

Für nähere Einzelheiten zu diesem Anhang : siehe Amtsblatt des Europäischen Patentamts, Nr.12/82